Europäisches Patentamt

European Patent Office

Office européen des brevets

(19)

(11) Veröffentlichungsnummer: **0 305 857**

**A2**

(12) **EUROPÄISCHE PATENTANMELDUNG**

(21) Anmeldenummer: 88113673.3

(22) Anmeldetag: 23.08.88

(51) Int. Cl.⁴: **C10B 53/00 , B01J 8/24**

(30) Priorität: 29.08.87 DE 3728982

(43) Veröffentlichungstag der Anmeldung:
08.03.89 Patentblatt 89/10

(84) Benannte Vertragsstaaten:
**AT BE CH DE GB IT LI NL SE**

(71) Anmelder: **Asea Brown Boveri
Aktiengesellschaft
Kallstadter Strasse 1
D-6800 Mannheim-Käfertal(DE)**

(72) Erfinder: **Steinstrasser, Frank, Dr.
Hölkeskampring 169
D-4690 Herne 1(DE)**
Erfinder: **Förster, Walter
Hohert 1
D-6940 Weinheim-Rippenweier(DE)**

(74) Vertreter: **Rupprecht, Klaus, Dipl.-Ing. et al
c/o Asea Brown Boveri Aktiengesellschaft
Zentralbereich Patente Postfach 100351
D-6800 Mannheim 1(DE)**

(54) **Verfahren zum Regeln der Höhe eines Wirbelbettes.**

(57)
1. Verfahren zum Regeln der Höhe eines Wirbelbettes in einem Pyrolysereaktor.

2.1 Bei der pyrolytischen Verwertung von Abfallstoffen in einem Wirbelbett (26), muß die Höhe (h) des Wirbelbettes aus verfahrenstechnischen Gründen auf konstanter Höhe gehalten werden.

2.2 Zur Erfassung der Höhe des Wirbelbettes (26) wird daher der Differenzdruck zwischen dem Wirbelgas vor seinem Eintritt in das Wirbelbett (26) und dem Wirbelgas im Pyrolysegasraum (32) ermittelt und als Abbild für die Höhe des Wirbelbettes (26) benutzt. Bei einer Abweichung der Wirbelbetthöhe von einem vorgegebenen Sollwert, wird die Förderleistung einer Austragvorrichtung (18), welche Pyrolyserückstand aus dem Pyrolysereaktor (10) austrägt, beeinflußt.

2.3 Durch diese Maßnahmen wird auf einfache kostengünstige Weise eine Regelung der Höhe (h) des Wirbelbettes (26) auf einen vorgegebenen Sollwert erreicht

Fig. 1

## Verfahren zum Regeln der Höhe eines Wirbelbettes

Die Erfindung betrifft ein Verfahren zum Regeln der Höhe eines Wirbelbettes in einem Pyrolysereaktor, in dem Abfallmaterial, insbesondere Kohlenwasserstoffe enthaltendes Abfallmaterial, thermisch zersetzt wird und der Pyrolyserückstand durch eine Austragvorrichtung aus dem Pyrolysereaktor entfernt wird, wobei die Höhe des Wirbelbettes durch eine Druckdifferenzmessung erfaßt wird

Die Höhe oder Dicke eines Wirbelbettes in einem Pyrolysereaktor wird durch den Massenstrom bestimmt, der durch den Pyrolysereaktor geführt wird. Der Massenstrom umfaßt das Abfallmaterial, das für die Ausbildung des Wirbelbettes erforderliche feinkörnige Wirbelmaterial, wie z.B. Sand, sowie pulverförmige oder körnige Zuschlagstoffe zur Bindung von Schadstoffen. Da eine vorbestimmte Höhe des Wirbelbettes für einen wirtschaftlichen Betrieb des Pyrolysereaktors erforderlich ist und andererseits ein genügend großer Pyrolysegasraum über dem Wirbelbett freibleiben muß, um der Wirbelschicht genügend Raum für ihre Ausbildung zu geben, ist eine Regelung der Wirbelbetthöhe erforderlich. Aus dem Stand der Technik ist es bekannt, die Lage der Wirbelbett-Oberfläche durch eine Differenzdruckmessung zu bestimmen und den Antrieb eines Zellenrades, durch das Wirbelmaterial dem Pyrolysereaktor zugeführt wird, zu beeinflussen (DE-OS 29 20 383). Hierdurch läßt sich die gewünschte Höhe des Wirbelbettes nur unvollständig einhalten, da die vorgenannten übrigen Komponenten des Massenstromes, d.h. das Abfallmaterial und die Zuschlagstoffe, einen erheblichen Einfluß auf die Höhe des Wirbelbettes haben. Zudem ist aus dem Stand der Technik nicht zu entnehmen, zwischen welchen Stellen die Druckdifferenz erfaßt werden muß, um eine einwandfreie Regelung zu erreichen. Denn die Druckdifferenz, die von der Wirbelbetthöhe abhängig ist, soll zur leichten meßtechnischen Erfassung möglichst groß sein und Änderungen der Höhe des Wirbelbettes sollen sich durch möglichst große Änderungen der Druckdifferenz bemerkbar machen.

Desweiteren ist ein Verfahren zum Regeln der Höhe eines Wirbelbettes aus der US-PS 4 421 523 bekanntgeworden. Danach wird die Höhe des Wirbelbettes über die Berechnung dessen Dichte bestimmt. Hierzu wird über die gesamte vertikale Erstreckung des Pyrolyseraumes, in dem die Wirbelschicht ausgebildet ist, in verschiedenen Höhenlagen jeweils der Druck gemessen, aus den Meßwerten benachbarter Meßstellen jeweils gleichzeitig der Differenzdruck selbsttätig gebildet und die Ergebnisse in eine Datenverarbeitungseinheit eingegeben. In dieser Datenverarbeitungseinheit wird die mittlere Dichte des Wirbelbettes aus den eingegebenen Ergebnissen berechnet und eine Einflußfunktion bestimmt, mit deren Hilfe die Höhe des Wirbelbettes errechnet und die Zufuhr der Ausgangsmaterialien wie Koks, Luft oder Sauerstoff, Dampf und Brenngas beim Abweichen von einem vorgegebenen Sollwert beeinflußt wird. Das bekannte Verfahren ist sehr aufwendig und durch die Vielzahl der erforderlichen Druckmeßstellen insbesondere durch Ablagerungen von Material in den Druckmeßleitungen störanfällig. Dies umso mehr, als die Drücke und Differenzdrücke verhältnismäßig klein sind und durch thermische Einflüsse daher leicht verfälscht werden können.

Der Erfindung liegt daher die Aufgabe zugrunde, ein Verfahren der eingangs genannten Art anzugeben, das die Nachteile des Standes der Technik überwindet und das es gestattet, die Höhe des Wirbelbettes mit ausreichender Genauigkeit auf einfache und störungsfreie Weise konstantzuhalten

Die Lösung dieser Aufgabe besteht für ein Verfahren der eingangs genannten Art darin, daß der Überdruck $p_1$ des Wirbelgases vor seinem Eintritt in das Wirbelbett der Überdruck $p_2$ des Pyrolysegases dagegen oberhalb des Wirbelbettes abwechselnd an mindestens zwei, vorzugsweise benachbarten Druckmeßstellen des Pyrolysegasraumes erfaßt wird, wobei jener Druckmeßstelle, die jeweils nicht benutzt wird, ein Gas durch die zugehörige Wirkdruckleitung zugeführt wird, das gegenüber dem Pyrolysegas des Pyrolysegasraumes einen höheren Druck aufweist, daß die Differenz der Überdrücke $p_1$-$p_2$ (Differenzdruck) selbsttätig gebildet wird, und daß bei einer Abweichung des Differenzdruckes von einem vorgegebenen Sollwert die Förderleistung der Austragsvorrichtung zum Ausgleich dieser Abweichung verändert wird.

Die Druckdifferenz, welche abhängig ist von der Höhe des Wirbelbettes, wird also nicht unmittelbar am Wirbelbett, sondern zwischen dem Wirbelgas vor seinem Eintritt in das Wirbelbett und dem Pyrolysegas gemessen, das sich im Pyrolysegasraum oberhalb des Wirbelbettes ansammelt. Hierdurch wird eine Druckdifferenz gemessen, die im Bereich von ungefähr 100 bis 500 mbar liegt und daher meßtechnisch ohne Schwierigkeiten erfaßt werden kann. Darüberhinaus reagiert diese Druckdifferenz sehr empfindlich auf Höhenänderungen des Wirbelbettes sowie auf Änderungen der Wirbelgaszufuhr, die ihrerseits die Höhe des Wirbelbettes beeinflussen. Zum Gesamterfolg der erfindungsgemäßen Maßnahmen trägt die Beeinflussung der Austragvorrichtung in Abhängigkeit vom Differenzdruck bzw von der Höhe des Wirbelbettes wesentlich bei. Denn hierdurch wird nicht nur ein einzelner Bestandteil des Massenstromes, sondern der gesamte Massenstrom zur Regelung der Wirbelbetthöhe herangezogen. Hierdurch werden Schwankungen der Wirbelbetthöhe sehr rasch ausgeglichen und das Massenverhältnis jener Stoffe, die dem Pyrolysereaktor zugeführt werden, wie Abfallmaterial, Wirbelmaterial und Zuschlagstoffe, bleibt in erwünschter Weise konstant. Durch die Anordnung von zwei Druckmeßstellen, die abwechselnd für die Messung des Druckes $p_2$ eingesetzt werden, ist die Möglichkeit gegeben, die jeweils freie Druckmeßstelle und die sich daran anschließende Wirkdruckleitung durch ein Gas zu spülen. Hierdurch werden Bestandteile des Wirbelbettes, die trotz des zwischengeschalteten Pyrolysegasraumes in die Öffnungen der Druckmeßstellen und die Wirkdruckleitungen gelangen, in den Pyrolysereaktor zurückgespült oder zurückgedrückt. Der Überdruck $p_2$ wird daher immer störungsfrei und exakt erfaßt. Besondere Maßnahmen bei der Erfassung des Überdruckes $p_1$ sind nicht erforderlich, da das Wirbelgas keine Verunreinigungen mit sich führt. Dies trifft be sonders dann zu, wenn als Wirbelgas jenes Pyrolysegas benutzt wird, das in der Pyrolyseanlage, deren Bestandteil der Pyrolysereaktor ist, gewonnen und gereinigt wurde.

Wird das Wirbelbett über einem Lochboden ausgebildet, so ist es am einfachsten, daß der Wirbelgas-Überdruck $p_1$ im Wirbelgasraum unterhalb des Lochbodens erfaßt wird. Wird das Wirbelgas dagegen durch eine Vielzahl von Wirbelgasrohren dem Wirbelbett zugeführt, wobei die Wirbelgasrohre von einer Verteilleitung mit Wirbelgas versorgt werden, so wird gemäß einer bevorzugten Weiterbildung der Erfindung der Wirbelgas-Überdruck $p_1$ in der Verteilleitung erfaßt.

Damit eine ausreichende Spülung und Reinigung der Meßstellen erreicht wird, ist es empfehlenswert, daß Gas mit einem Überdruck von mindestens 3 bar verwendet wird.

Weitere Vorteile und Merkmale des erfindungsgemäßen Verfahrens gehen aus der folgenden Beschreibung von als Ausführungsbeispiele dienenden Anordnungen hervor, die für die Durchführung des erfindungsgemäßen Verfahrens geeignet und in der Zeichnung schematisch dargestellt sind.

Hierbei zeigt:

Fig 1 Das Schaltschema eines Pyrolysereaktors, dessen Wirbelbett gemäß der Erfindung geregelt wird und

Fig 2 den Ausschnitt II der Figur 1 als Einzelheit und als Ausführungsvariante.

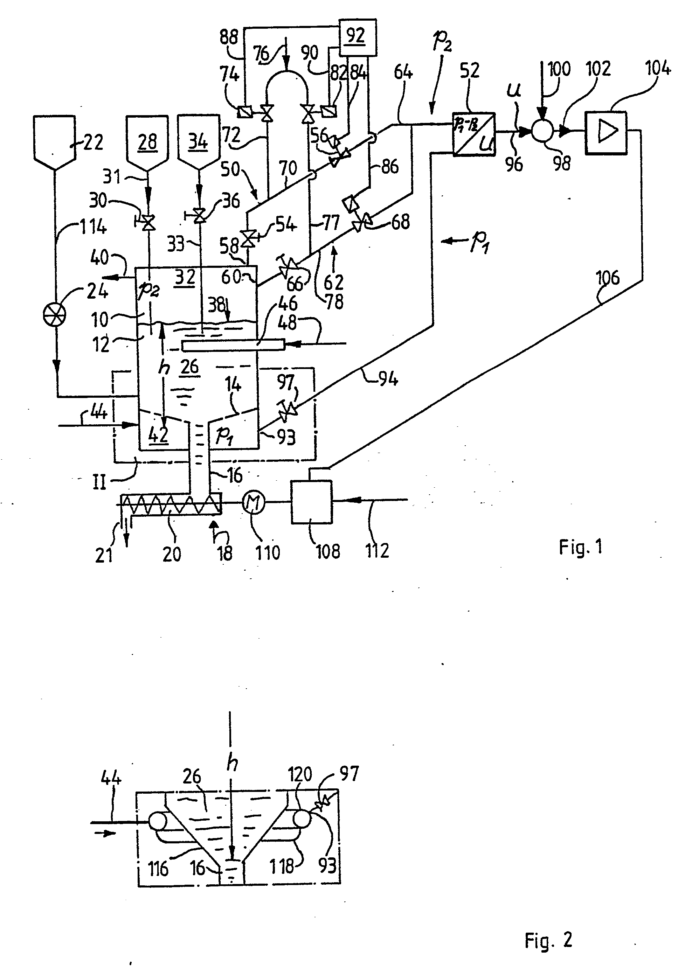

In Figur 1 ist ein stehender Pyrolysereaktor 10 dargestellt, dessen Innenraum kreiszylindrisch ausgebildet ist. Im unteren Bereich des Innenraumes ist ein Lochboden 14 angeordnet, der geringfügig trichterförmig mit der Spitze nach unten ausgebildet ist und der in ein vertikal verlaufendes, zentrisches Austragrohr 16 übergeht. Am unteren Ende des Austragrohres 16 ist eine Austragvorrichtung 18 vorgesehen, die eine ungefähr horizontal verlaufende Förderschnecke 20 aufweist. Der Ausgang 21 der Förderschnecke mündet nach unten in einen nicht dargestellten Aufnahmebehälter.

Seitlich des Pyrolysereaktors 10 ist ein Trichter 22 vorgesehen, der unter Zwischenschaltung einer Zellenradschleuse 24 durch eine Leitung 114 mit der Wirbelschicht 26 verbunden ist, die sich oberhalb des Lochbodens 14 ausbildet. Der Trichter 22 dient zur Aufgabe des kleinstückigen Abfallmaterials. Oberhalb des Pyrolysereaktors 10 ist ein Behälter 28 angeordnet, der für die Aufnahme von pulverförmigen und/oder körnigen Zuschlagstoffen vorgesehen ist. Der Behälter 28 ist unter Zwischenschaltung eines Drossel- und Absperrorganes 30 durch eine Leitung 31 an den Innenraum 12 angeschlossen, und zwar an jenen Bereich, in dem sich das Wirbelbett 26 befindet. Zusätzlich ist ein weiterer Behälter 34 oberhalb des Pyrolysereaktors angeordnet, der für die Aufnahme von feinkörnigem Wirbelmaterial, zweckmäßig Sand, vorgesehen ist. Dieser weitere Behälter 34 ist durch eine Leitung 33 ebenfalls mit dem Wirbelbett 26 verbunden, wobei ein Drossel- und Absperrorgan 36 in die Leitung 33 eingefügt ist.

Da das Wirbelbett 26 nicht den gesamten Innenraum 12 ausfüllt und eine Oberfläche 38 aufweist, verbleibt oberhalb des Wirbelbettes der bereits erwähnte Pyrolysegasraum 32, dessen Höhe ungefähr das 0.5 bis 1-fache der lichten Weite des Pyrolysereaktors beträgt. An diesen Pyrolysegasraum 32 ist eine Rohrleitung 40 angeschlossen, durch die das entstandene Pyrolysegas einer nicht dargestellten Kühl- und Reinigungsvorrichtung zugeführt wird. Da der Lochboden 14 vom unteren Ende des Innenraums 12 einen vertikalen Abstand aufweist, der ungefähr das 0,2 bis 0,5-fache der lichten Weite des Innenraums 12 aufweist, ist unterhalb des Lochbodens 14 der Wirbelgasraum 42 entstanden. In diesem Wirbelgasraum wird durch eine Leitung 44 Wirbelgas unter Überdruck zugeführt. Der Überdruck beträgt vorzugsweise 1 bis 4 bar. Als Wirbelgas wird insbesondere das bei der Pyrolyse entstandene und gereinigte Pyrolysegas verwendet.

Im Bereich der Wirbelschicht 26 ist noch mindestens ein Heizrohr 46 im Wirbelbett 26 angeordnet, das durch Gas, bevorzugt Pyrolysegas, befeuert wird. Die Gaszufuhr ist durch den Pfeil 48 angedeutet.

Im oberen Endbereich des Pyrolysegasraums 32, vorzugsweise an seiner Decke, ist die erste Druckmeßstelle 58 vorgesehen, an die eine erste Wirkdruckleitung 50 angeschlossen ist, die zu einem Differenzdruckgeber 52 führt. Ausgehend vom Pyrolysegasraum 32 ist in die erste Wirkdruckleitung 50 in unmittelbarer Nähe des Pyrolysereaktors ein Absperrorgan 54, zweckmäßig in Form eines Kugelabsperrhahnes, und dann ein steuerbares erstes Absperrorgan 56, vorzugsweise in Form eines ersten Magnetventils eingefügt. In der Nähe der ersten Druckmeßstelle 58, vorzugsweise an der vertikal verlaufenden Außenwand des Pyrolysegasraums 32, ist eine zweite Druckmeßstelle 60 angeordnet, an die eine zweite Wirkdruckleitung 62 angeschlossen ist. Diese zweite Wirkdruckleitung 62 ist an der Stelle 64 an die erste Wirkdruckleitung 50 angeschlossen, wobei sich die Stelle 64 vor dem Eintritt der ersten Wirkdruckleitung 50 in den Differenzdruckgeber 52 befindet. In die zweite Wirkdruckleitung 62 ist, genau wie in die erste Wirkdruckleitung, zunächst ein Absperrorgan 66, zweckmäßig in Form eines Kugelabsperrhahnes, und dann ein steuerbares zweites Absperrorgan 68, vorzugsweise in Form eines zweiten Magnetventils, eingefügt Die beiden Druckmeßstellen 58,60 müssen jedoch einen solchen Abstand haben, daß während der Spülung der einen Druckmeßstelle die Druckmessung P2 an der anderen Druckmeßstelle nicht gestört wird. Ein Abstand von 0,5m ist ausreichend und zweckmäßig.

An das Teilstück 70 der ersten Wirkdruckleitung 50, das sich zwischen dem Absperrorgan 54 und dem ersten Magnetventil 56 befindet, ist eine Leitung 72 angeschlossen, die unter Zwischenschaltung eines steuerbaren dritten Absperrorgans 74, vorzugsweise eines dritten Magnetventils, zu einer Leitung 76 führt. In dieser Leitung 76 befindet sich Gas, bevorzugt gereinigtes Pyrolysegas unter einem Überdruck von ungefähr 3 bar. Dieses Pyrolysegas wird in der Anlage, deren Bestandteil der hier gezeigte Pyrolysereaktor ist, erzeugt und durch einen Verdichter auf den genannten Überdruck gebracht.

An das Teilstück 78 der zweiten Wirkdruckleitung 62, das sich zwischen dem Absperrorgan 66 und dem zweiten Magnetventil 68 befindet, ist eine Leitung 77 angeschlossen, die unter Zwischenschaltung eines steuerbaren, vierten Absperrorgans 82, vorzugsweise in Form eines vierten Magnetventils, ebenfalls zur Leitung 76 führt. Die Anschlußstelle der Leitung 72 bzw. 77 an die Wirkdruckleitung 50 bzw. 62 ist so gewählt, daß zwischen der Anschlußstelle und der Meßstelle 58 bzw. 60 jeweils eine Leitungsstrecke von mindestens 2 m vorhanden ist. Hierdurch werden auch die durch Ablagerungen und Verstopfungen besonders gefährdeten Bereiche der Wirkdruckleitungen gespült.

Zur Betätigung des vorzugsweise jeweils elektrisch betätigbaren ersten, zweiten, dritten und vierten Absperrorgans 56, 68, 74, 82 ist jeweils eine erste, zweite, dritte und vierte elektrische Steuerleitung 84, 86, 88, 90 vorgesehen, welche die entsprechenden Absperrorgane jeweils mit einem Steuergerät 92 verbinden.

Das Steuergerät ist nun derart programmiert, daß in einem ersten Betriebszustand das erste Absperrorgan 56 und das vierte Absperrorgan 82 geöffnet sind, wogegen das zweite Absperrorgan 68 und das dritte Absperrorgan 74 geschlossen sind. Bei geöffneten Absperrorganen 54 und 66 ist jetzt die erste Meßstelle 58 durch die erste Wirkdruckleitung 50 mit dem Differenzdruckgeber 52 verbunden, während gleichzeitig durch das geöffnete vierte Absperrorgan 82 Pyrolysegas von der Leitung 76 über die Leitung 77 zum Teilstück 78 strömt und von hier zu ersten Meßstelle 60 geleitet wird. Da das aus der Leitung 76 zugeführte Pyrolysegas einen Überdruck von mindestens 3 bar aufweist, wird die Meßstelle 60 sowie der sich daran anschließende Bereich der zweiten Wirkdruckleitung 62 von eventuell sich dort ablagernden Verunreinigungen freigespült. Der Überdruck p2 wird hierbei durch die erste Wirkdruckleitung 50 dem Differenzdruckgeber 52 zugeführt. Da das zweite Absperrorgan 68 geschlossen ist, kann kein Spülgas durch die zweite Wirkdruckleitung 62 zum Differenzdruckgeber gelangen. Durch das geschlossene dritte Absperrorgan 74 ist eine Verfälschung der Druckmessung ausgeschlossen. Dieser erste Betriebszustand wird eine bestimmt Zeitspanne, vorzugsweise ungefähr 5 Minuten aufrechterhalten, dann wird durch das Steuergerät 92 selbsttätig auf einen zweiten Betriebszustand umgeschaltet. Um eine ausreichende Spülwirkung zu erreichen, muß die Gasgeschwindigkeit in den Wirkdruckleitungen mindestens 3 m/s betragen.

In dem zweiten Betriebszustand ist das erste Absperrorgan 56 und das vierte Absperrorgan 82 geschlossen, das zweite Absperrorgan 68 und das dritte Absperrorgan 74 dagegen geöffnet. Jetzt ist die zweite Meßstelle 60 über die zweite Wirkdruckleitung 62 mit dem Differenzdruckgeber 52 verbunden, während von der Leitung 76 Pyrolysegas durch die Leitung 72 und das Teilstück 70 der ersten Meßstelle 58 zugeführt wird. Hierdurch wird die erste Meßstelle 58 sowie der sich daran anschließende Bereich der ersten Wirkdruckleitung 50 von Verunreinigungen und Verstopfungen befreit. Dieser zweite Betriebszustand wird vorzugsweise ebensolange aufrechterhalten wie der erste Betriebszustand. Dann schaltet das Steuergerät 92 selbttätig auf den ersten Betriebszustand zurück, und dieser Vorgang beginnt von neuem. Durch das vorbeschriebene, fortlaufende Umschalten von dem ersten in den zweiten Betriebszustand ist eine fortlaufende Reinigung der Druckmeßstellen 58 und 60 gewährleistet, ohne daß der Betrieb der Regelanlage unterbrochen werden muß. Der Überdruck p2 wird somit einwandfrei erfaßt.

Am Wirbelgasraum 42 ist eine dritte Druckmeßstelle 93 angeordnet, die durch eine dritte Wirkdruckleitung 94 mit dem Differenzdruckgeber 52 verbunden ist. Hierbei ist in unmittelbarer Nähe des Pyrolysereaktors ein Absperrorgan 97, zweckmäßig in Form eines Kugelabsperrhahnes, in die dritte Wirkdruckleitung 94 eingefügt. Diese dritte Wirkdruckleitung 94 führt den Druck $p_1$, wogegen die erste bzw. zweite Wirkdruckleitung 50 bzw. 62 den Druck $p_2$ zum Differenzdruckgeber 52 führt.

Die lichte Weite der Wirkdruckleitungen beträgt mindestens 9 mm, vorzugsweise 12 bis 15 mm. Von Bedeutung ist es noch, daß die Wirkdruckleitungen mit Steigung zum Differenzdruckgeber verlegt werden, wie dies in Figur 1 angedeutet ist. Hierdurch ist gewährleistet, daß in den Wirkdruckleitungen entstehendes Kondensat vom Differenzdruckgeber 52 ferngehalten wird.

Im Differenzdruckgeber 52 wird die Differenz aus den Drücken $p_1$ und $p_2$ gebildet, wobei $p_1$ der Druck im Wirbelgasraum 42 und der Druck $p_2$ der Druck im Pyrolysegasraum 92 ist und wobei diese Drücke dem Differenzdruckgeber 52 durch die erste und zweite Wirkdruckleitung zugeführt werden. Desweiteren wird im Differenzdruckgeber 52 der gemessene Differenzdruck in ein elektrisches Spannungssignal u umgewandelt, dessen Größe abhängig ist von der Höhe des Differenzdruckes.

Der spannungsführende Ausgang des Differenzdruckgebers 52 ist durch eine elektrische Leitung 96 mit einer Vergleichsstelle 98 verbunden, welcher der Sollwert für die Wirbelbetthöhe in Form einer elektrischen Spannung zuführbar ist. Die Zuführung dieses Sollwertes wird durch den Pfeil 100 angedeutet. Der Ausgang der Vergleichsstelle 98 ist durch die elektrische Leitung 102 mit dem Eingang eines Meßverstärkers 104 verbunden, dessen Ausgang durch eine elektrische Leitung 106 an ein Leistungsstellglied 108 angeschlossen ist. Durch dieses Leistungsstellglied 108 ist die Drehzahl eines Elektromotors 110, der die Förderschnecke 20 der Austragvorrichtung 18 antreibt, veränderbar. Das Leistungsstellglied 108 ist vorzugsweise als Stromrichter ausgebildet und in die elektrische Stromzufuhr 112 des Elektromotors 110 eingeschaltet.

Während des Betriebs wird Abfallmaterial in den Trichter 22 eingegeben und durch die Leitung 114 mit eingefügter Zellenradschleuse 24 in das Wirbelbett 26 zweckmäßig mit konstantem Massenstrom eingebracht. Gleichzeitig werden aus den Behältern 28 und 34 Zuschlagstoffe bzw. Sand dem Innenraum 12 vorzugsweise mit konstantem Massenstrom zugeführt. Der Sand dient als Wirbelmedium, die Zuschlagstoffe, wie Kalk oder Dolomit, zur Bindung von Schadstoffen, die während der Pyrolyse entstehen. Durch die Leitung 44 wird in der Anlage erzeugtes Pyrolysegas, das als Wirbelgas dient, in den Wirbelgasraum 44 unter Druck eingeführt. Dieses Pyrolysegas strömt durch die Öffnungen des Lochbodens 14, verwirbelt das eingebrachte Material und erzeugt damit oberhalb des Lochbodens das Wirbelbett 26, das sich wie eine kochende Flüssigkeit verhält. Das Wirbelbett hat demnach eine unruhige Oberfläche 38, die an den darüber verbleibenden Pyrolysegasraum 32 grenzt. Die Beheizung des Wirbelbettes wird mit Hilfe des Heizrohres 46 durchgeführt. Der Pyrolyserückstand wird durch das Austragrohr 16 der Austrageinrichtung 18 zugeführt, deren Förderschnecke 20 den Pyrolyserückstand dem Ausgang 21 zuführt. Durch diesen Ausgang 21 wird der Pyrolyserückstand aus dem Pyrolysereaktor entfernt. Der Pyrolyserückstand enthält neben den eigentlichen Resten des Abfallmaterials einen Teil des Wirbelsandes, der vom Behälter 34 zugeführt wird, sowie Reste von Zuschlagstoffen, die dem Wirbelbett aus dem Behälter 28, bevorzugt mit konstantem Massenstrom, zugeführt werden

Der Überdruck $p_1$ wird an der dritten Druckmeßstelle 93 erfaßt und durch die dritte Wirkdruckleitung 94 bei geöffnetem Absperrorgan 97 dem Differenzdruckgeber 52 zugeführt.

Der Überdruck $p_2$ des Pyrolysegases im Pyrolysegasraum 32 wird abwechselnd an der ersten oder zweiten Drußmeßstelle 58 bzw. 60 erfaßt und durch die erste Wirkdrucklei tung 50 bzw zweite Wirkdruckleitung 62 dem entsprechenden Eingang des Differenzdruckgebers 52 zugeleitet. Hierbei erfolgt eine Durchspülung jener Druckmeßstelle 58 bzw. 60, die gerade nicht in Betrieb ist. Der Vorgang dieses wechselweisen Einsatzes der ersten und zweiten Wirkdruckleitung 50, 62 und die Durchspülung der nicht benutzten Druckmeßstellen ist bereits weiter oben beschrieben worden. Der Differenzdruck $p_1$-$p_2$ zwischen den Druckmeßstellen 92 und 58 bzw. 60 ist von der Höhe h des Wirbelbettes 26 derart abhängig, daß bei wachsender Höhe h der Differenzdruck ansteigt, bei fallender Höhe dagegen abnimmt.

Im Differenzdruckgeber 52 wird der Differenzdruck $p_1$-$p_2$ gebildet. Dieser Differenzdruck wird gleichzeitig in ein elektrisches Spannungssignal u umgewandelt, dessen Höhe abhängig ist von der Größe des Differenzdruckes. Das Spannungssignal wird dann durch die elektrische Leitung 96 der Vergleichsstelle 98 zugeführt und dort mit dem Sollwert für die Wirbelbetthöhe verglichen, der in Form einer elektrischen Spannung der Vergleichsstelle zugeführt wird. Diese Zuführung ist durch den Pfeil 100 angedeutet. Ist das Spannungssignal identisch mit dem Sollwertsignal, das heißt die Höhe des Wirbelbettes besitzt den gewünschten Sollwert, so entsteht an der Vergleichsstelle kein Vergleichssignal. In diesem Falle wird die momentane Drehzahl des Elektromotors 110 und somit die Förderleistung der Förderschnecke 20 vom Meßverstärker 104 nicht verändert. Weicht die Höhe des Wirbelbetts vom Sollwert ab, so verändert sich

die Druckdifferenz $p_1$-$p_2$ und somit das Spannungssignal u. Es besteht daher ein Unterschied zwischen dem Spannungssignal u und dem Sollwertsignal und es wird in der Vergleichsstelle 98 ein Signal gebildet, das dem Unterschied entspricht. Dieses Signal wird durch die elektrische Lei tung 102 dem Meßverstärker 104 zugeführt, der das Signal verstärkt und durch die elektrische Leitung 106 an das Leistungsstellglied 108 weitergibt. Dieses Leistungsstellglied 108 verändert durch Beeinflussung der Stromzufuhr die Drehzahl des Elektromotos 110 und somit die Förderleistung der Förderschnecke 20 solange, bis die Höhe h des Wirbelbettes den gewünschten Sollwert wieder erreicht hat und an der Vergleichsstelle 98 der Istwert des Spannungssignals u übereinstimmt mit dem Sollwert. Ist die Höhe des Wirbelbettes zu groß, so wird die Drehzahl des Elektromotors erhöht und mehr Material aus dem Wirbelbett ausgetragen. Ist die Höhe des Wirbelbettes zu gering, wird die Drehzahl des Elektromotors erniedrigt und weniger Material ausgetragen.

In Figur 2 ist der Bereich II des Gegenstands der Figur 1 als Ausführungsvariante dargestellt. Gemäß Figur 2 verjüngt sich der untere Endbereich 116 des Pyrolysereaktors kreiskegelförmig nach unten und geht in das Austragrohr 16 über. Das Wirbelgas wird dem Wirbelbett 26 nicht durch einen Wirbelboden zugeführt, sondern durch Wirbelgasrohre 118, die in den kreiskegelförmigen unteren Endbereich 116 münden. Zur Wirbelgasversorgung sind diese Wirbelgasrohre 118 an eine Verteilleitung 120 angeschlossen, die den unteren Endbereich des Pyrolysereaktors umgibt. Zur Wirbelgasversorgung ist die Verteilleitung 120 an die Rohrleitung 44 angeschlossen, die Pyrolysegas unter Druck zuführt.

Die dritte Druckmeßstelle 92 ist in der Ausführungsvariante gemäß Figur 2 an der Verteilleitung 120 angebracht. Die Anordnung der übrigen Bauteile ist identisch mit der Anordnung gemäß Figur 1, so daß sich für den Fachmann hier weiteres erübrigt. Das gleiche gilt für den Betrieb der Anlage. Zu bemerken ist noch, daß unter dem Begriff "Leitung" im Sinne vorliegender Anmeldung jeweils eine Rohrleitung verstanden sein soll. Elektrische Leitungen dagegen sind zum Unterschied jeweils als solche bezeichnet. Unter dem Begriff "Höhe h des Wirbelbettes" ist der vertikale Abstand zwischen dem tiefsten fluidisierten Punkt und der Oberfläche des Wirbelbettes verstanden.

Die Absperrorgane 54,66,97 dienen dazu, die Wirkdruckleitungen 50,62,94 von den Druckmeßstellen trennen zu können, falls während des Betriebes Reparaturen an den Wirkdruckleitungen erforderlich sein sollten. Während dieser Zeit wird die Höhe des Wirbelbettes von Hand geregelt. Die Ausbildung der Absperrorgane 54,66 als Kugelabsperrhähne hat den Vorteil, daß im geöffneten Zustand ein stufenloser, glatter Strömungsweg in den Kugelabsperrhähnen vorhanden ist. Hierdurch wird vermieden, daß sich beim Spülen der Wirkdruckleitungen und der Druckmeßstellen durch Pyrolysegas Schmutzteile im Absperrorgan festsetzen und dessen Funktion beeinträchtigen. Die Absperrorgane 54,66,97 sind möglichst nahe am Pyrolysereaktor angeordnet. Der Überdruck $p_1$ ist größer als der Überdruck $p_2$; letzterer kann auch negative Werte annehmen.

Da der Istwert der Wirbelschichthöhe durch den gemessenen Differenzdruck abgebildet wird, ist der Sollwert der Wirbelschichthöhe jener Differenzdruck, bei dem der Sollwert erreicht ist.

## Ansprüche

1. Verfahren zum Regeln der Höhe eines Wirbelbettes (26) in einem Pyrolysereaktor (10), in dem Abfallmaterial, insbesondere Kohlenwasserstoffe enthaltendes Abfallmaterial, thermisch zersetzt wird und der Pyrolyserückstand durch eine Austragvorrichtung (18) aus dem Pyrolysereaktor entfernt wird, wobei die Höhe (h) des Wirbelbettes (26) durch eine Druckdifferenzmessung erfaßt wird, dadurch gekennzeichnet, daß der Überdruck $p_1$ des Wirbelgases vor seinem Eintritt in das Wirbelbett (26), der Überdruck $p_2$ des Pyrolysegases dagegen oberhalb des Wirbelbettes (26) abwechselnd an mindestens zwei, vorzugsweise benachbarten Druckmeßstellen (58,60) des Pyrolysegasraumes (32) erfaßt wird, wobei jener Druckmeßstelle( 58 bzw.60), die jeweils nicht benutzt wird, ein Gas durch die zugehörige Wirkdruckleitung (50 bzw. 62) zugeführt wird, das gegenüber dem Pyrolysegas des Pyrolysegasraumes einen höheren Druck aufweist, daß die Differenz der Überdrücke ($p_1$-$p_2$) (Differenzdruck) selbsttätig gebildet wird, und daß bei einer Abweichung des Differenzdruckes von einem vorgegebenen Sollwert die Förderleistung der Austragvorrichtung (18) zum Ausgleich dieser Abweichung verändert wird.

2. Verfahren nach Anspruch 1, bei dem das Wirbelgas durch einen Lochboden (14) zugeführt wird, dadurch gekennzeichnet, daß der Wirbelgas-Überdruck $p_1$ im Wirbelgasraum (42) unterhalb des Lochbodens (14) erfaßt wird.

3. Verfahren nach Anspruch 1, bei dem das Wirbelgas durch eine Vielzahl von Wirbelgasrohren (118) dem Wirbelbett (26) zugeführt wird, wobei die Wirbelgasrohre (118) von einer Verteilleitung (120) mit Wirbelgas versorgt werden, dadurch gekennzeichnet, daß der Wirbelgas-Überdruck ($p_1$) in der Verteilleitung (120) erfaßt wird.

4. Verfahren nach einem der Ansprüche 1 bis 3, dadurch gekennzeichnet, daß als Gas gereinigtes Pyrolysegas den Druckmeßstellen zugeführt wird.

5. Verfahren nach einem der Ansprüche 1 bis 4, dadurch gekennzeichnet, daß Gas mit einem Überdruck von mindestens 3 bar verwendet wird.

Fig. 1

Fig. 2